# EUROPEAN PATENT APPLICATION

(11) **EP 4 668 471 A1**
(43) Date of publication of application: **24.12.2025**
(21) Application number: 24918972.1
(22) Date of filing: 03.12.2024
(51) Int. Cl.: H01M 50/609

(54) **APPARATUS FOR INJECTING ELECTROLYTE OF SECONDARY BATTERY**

(30) Priority: 19.01.2024 KR 20240009002
(71) Applicant: LG Energy Solution, Ltd., Seoul 07335 (KR)
(72) Inventor: LEE, Su Ho, Daejeon 34122 (KR)
(74) Representative: Plasseraud IP
(86) International application number: PCT/KR2024/019573
(87) International publication number: WO 2025/154945

(57) **Abstract**

Disclosed is an electrolyte injection apparatus for secondary batteries, and more particularly an electrolyte injection apparatus including a frame unit including a lower plate and an upper plate spaced apart from the lower plate by a predetermined distance, the center of the upper plate being open, a pallet unit detachably located above the lower plate, the pallet unit being provided with a lower hopper into which a secondary battery and an electrolyte are supplied, an injection unit located above the pallet unit, the injection unit being configured to supply the electrolyte to the lower hopper, and a needle unit located above the upper plate, the needle unit being configured to supply the electrolyte to the injection unit, wherein the injection unit and the needle unit are separable from the upper plate.

## Description

### [Technical Field]

This application claims the benefit of priority to Korean Patent Application No. 2024-0009002 filed on January 19, 2024, the disclosure of which is incorporated herein by reference in its entirety.

The present invention relates to an electrolyte injection apparatus for secondary batteries, and more particularly to an electrolyte injection apparatus having a structure that facilitates replacement or maintenance of an injection unit.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Meanwhile, when manufacturing a cylindrical battery, it is necessary to perform an injection process of injecting an electrolyte into a case having an electrode assembly mounted therein such that the electrode assembly is sufficiently immersed in the electrolyte and maintaining the above state for a certain period of time such that micropores in the electrode assembly are filled with the electrolyte.

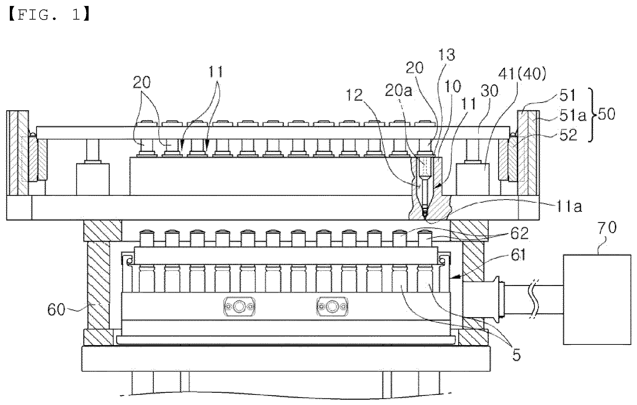

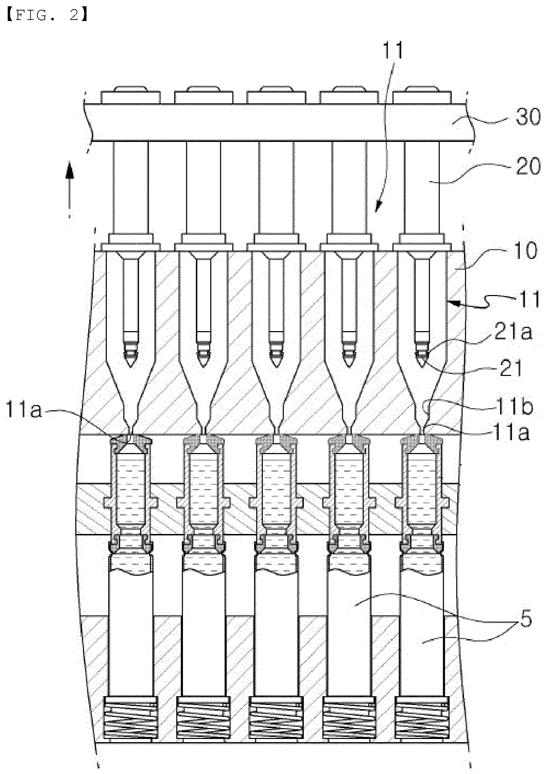

In this regard, FIG. 1 is a conceptual view of a conventional electrolyte supply apparatus, and FIG. 2 is an enlarged view showing a part of the conventional electrolyte supply apparatus.

As shown in FIG. 1, the conventional electrolyte supply apparatus includes a base nozzle member 10 having a plurality of nozzle portions 11, a plunger member 20 configured to open and close a discharge port 11a, a plunger fixing plate member 30, a lifting means 40 configured to move the plunger fixing plate member 30 upward and downward, a plate guide portion 50 configured to guide the operation of the lifting means 40, a housing member 60, and a vacuum pump 70.

In the conventional electrolyte supply apparatus, the nozzle portion 11 is provided with a supply chamber 12 configured to receive an electrolyte, and the discharge port 11a, which is configured to discharge the electrolyte, is formed at a lower part of the nozzle portion, whereby the electrolyte in the supply chamber 12 is injected into a battery case 5.

In addition, as shown in FIG. 2, a plunger member 20 is provided at the end thereof with an opening and closing portion 21 inserted into an opening and closing recess 11b to block the discharge port 11a, and an O-ring 21a, which is in tight contact with an inner circumferential surface of the opening and closing recess 11b, is coupled to the opening and closing portion 21. When the plunger member 20 moves downward and is inserted into the opening and closing recess 11b, therefore, the O-ring 21a comes into tight contact with inner circumferential surface of the opening and closing recess 11b, thereby blocking the discharge port 11a and sealing the interior of the supply chamber 12.

Since the electrolyte injection process is essential to manufacture of secondary batteries, the above operation must be repeated countless times, and therefore various parts must be replaced or maintained.

In conventional electrolyte supply apparatuses, however, the case jig member 61 including a storage case member 62 and the battery case 5 is mounted in the housing member 60, and a vacuum pump 70 is connected to a side surface of the housing member 60, making it very difficult to separate the case jig member 61.

### (Prior Art Documents)

(Patent Document 1) Korean Patent Application Publication No. 2009-0036793
(Patent Document 2) Korean Registered Patent Publication No. 1876834

### [Disclosure]

### [Technical Problem]

The present invention has been made in view of the above problems, and it is an object of the present invention to provide an electrolyte injection apparatus for secondary batteries having a structure that facilitates removal of an injection unit configured to supply an electrolyte.

It is another object of the present invention to provide an electrolyte injection apparatus for secondary batteries having a structure that facilitates attachment and detachment of each unit part constituting the injection unit.

It is a further object of the present invention to provide an electrolyte injection apparatus for secondary batteries enabling quick and reliable attachment and detachment of the injection unit.

### [Technical Solution]

An electrolyte injection apparatus for secondary batteries according to the present invention to accomplish the above objects includes a frame unit (100) including a lower plate (110) and an upper plate (120) spaced apart from the lower plate (110) by a predetermined distance, the center of the upper plate being open, a pallet unit (200) detachably located above the lower plate (110), the pallet unit being provided with a lower hopper (212) into which a secondary battery (B) and an electrolyte are supplied, an injection unit (300) located above the pallet unit (200), the injection unit being configured to supply the electrolyte to the lower hopper (212), and a needle unit (400) located above the upper plate (120), the needle unit being configured to supply the electrolyte to the injection unit (300), wherein the injection unit (300) and the needle unit (400) are separable from the upper plate (120).

Also, in the electrolyte injection apparatus for secondary batteries according to the present invention, the injection unit (300) may include a first plate-shaped holder (310) having a second through-hole (311), a socket portion (320) received in the second through-hole (311), an upper hopper (330) extending upwardly from the first holder (310) when a lower side thereof is fastened to the socket portion (320), and a nozzle portion (340) extending downwardly from the first holder (310) when an upper side thereof is fastened to the socket portion (320), and wherein the needle unit (400) may include a second plate-shaped holder (410) having a third through-hole (411) and a needle (420) received in the second holder (410).

Also, in the electrolyte injection apparatus for secondary batteries according to the present invention, the first holder (310) and the upper plate (120) may be detachably connected to each other by male and female screw fastening.

Also, in the electrolyte injection apparatus for secondary batteries according to the present invention, the socket portion (320) may be fixed to the second through-hole (311) by male and female screw fastening.

Also, in the electrolyte injection apparatus for secondary batteries according to the present invention, the upper hopper (330) may be fixed to the socket portion (320) by male and female screw fastening.

Also, in the electrolyte injection apparatus for secondary batteries according to the present invention, the nozzle portion (340) may be fixed to the socket portion (320) by male and female screw fastening.

Also, in the electrolyte injection apparatus for secondary batteries according to the present invention, the injection unit (300) may further include a sealing member (350) received in the socket portion (320), the sealing member (350) being interposed between the upper hopper (330) and the nozzle portion (340).

Also, in the electrolyte injection apparatus for secondary batteries according to the present invention, the injection unit (300) may further include a first handle (360) configured to allow the first holder (310) to be gripped therethrough.

Also, in the electrolyte injection apparatus for secondary batteries according to the present invention, the nozzle portion (340) may be formed in a hollow pipe shape with an open top and bottom and may be provided in a side surface thereof with one or more slits (341).

Also, in the electrolyte injection apparatus for secondary batteries according to the present invention, the one or more slits (341) may be formed along the side surface of the nozzle portion (340) in a spiral shape.

Also, the electrolyte injection apparatus for secondary batteries according to the present invention may further include a lift unit configured to move the injection unit upward and downward while supporting the injection unit.

Also, in the electrolyte injection apparatus for secondary batteries according to the present invention, the lift unit (500) may include a base portion (510), a support portion (520) configured to support a lower surface of the first holder (310), and a lifting portion (530) configured to move the support portion (520) upward and downward.

Also, in the electrolyte injection apparatus for secondary batteries according to the present invention, the lifting portion (530) may include a lifting bar (531) located between the base portion (510) and the support portion (520), the lifting bar comprising a first lifting bar (531a) and a second lifting bar (531b) connected to each other in a hinge structure while intersecting each other, a connection bar (532) fastened to one end of the first lifting bar (531a), a screw shaft (533) having a predetermined extension length, the screw shaft being configured to guide forward and rearward movement of the connection bar (532), and a manipulation portion (534) configured to move the connection bar (532) forward or rearward.

Also, in the electrolyte injection apparatus for secondary batteries according to the present invention, the lifting portion (530) may further include a guide bar (535) configured to guide the connection bar (532) forward or rearward.

Also, in the electrolyte injection apparatus for secondary batteries according to the present invention, the lift unit (500) may further include a second handle (540) configured to allow the base portion (510) to be gripped therethrough.

### [Advantageous Effects]

An electrolyte injection apparatus for secondary batteries according to the present invention has the advantage that an injection unit is located under a lower plate and is detachably fixed to the lower plate, whereby inspection or repair is very easy.

In addition, the electrolyte injection apparatus for secondary batteries according to the present invention has the merit that a first holder, a socket portion, an upper hopper, and a nozzle portion constituting the injection unit can be fixed or separated by male and female screw fastening, whereby replacement of each part is easy and it is possible to reduce the process time.

Furthermore, the electrolyte injection apparatus for secondary batteries according to the present invention has the advantage that a lift for removal or installation of the injection unit is further included, whereby it is possible to reduce the risk of accidents during process and to reduce the time required for attachment and detachment.

### [Description of Drawings]

FIG. 1 is a conceptual view of a conventional electrolyte supply apparatus.
FIG. 2 is an enlarged view showing a part of the conventional electrolyte supply apparatus.
FIG. 3 is a perspective view of an electrolyte injection apparatus for secondary batteries according to the present invention in the state in which an injection unit and a needle unit are coupled to each other and a lift unit is mounted under the injection unit.
FIG. 4 is a perspective view of the electrolyte injection apparatus for secondary batteries shown in FIG. 3 when viewed in the other direction.
FIG. 5 is a perspective view showing the interior of the electrolyte injection apparatus for secondary batteries shown in FIG. 3.
FIG. 6 is a front view of the electrolyte injection apparatus for secondary batteries shown in FIG. 5.
FIG. 7 is a perspective view of a pallet unit mounted to the electrolyte injection apparatus for secondary batteries according to the present invention.
FIG. 8 is a front view of the pallet unit shown in FIG. 7.
FIG. 9 is a perspective view of the electrolyte injection apparatus for secondary batteries according to the present invention in the state in which the injection unit and the needle unit are separated from each other and the lift unit is mounted under the injection unit.
FIG. 10 is a front view of the electrolyte injection apparatus for secondary batteries shown in FIG. 9.
FIG. 11 is a perspective view showing the interior of the electrolyte injection apparatus for secondary batteries shown in FIG. 9.
FIG. 12 is a perspective view showing the state in which the injection unit constituting the electrolyte injection apparatus for secondary batteries according to the present invention is seated on the lift unit.
FIG. 13 is a front view showing the state in which the injection unit shown in FIG. 12 is seated on the lift unit.
FIG. 14 is a perspective view of the injection unit constituting the electrolyte injection apparatus for secondary batteries according to the present invention.
FIG. 15 is a front view of the injection unit shown in FIG. 14.
FIG. 16 is an enlarged sectional view of part "A" of FIG. 15.
FIG. 17 is an exploded perspective view of part "A" of FIG. 15.
FIG. 18 is a sectional view illustrating a process of disassembling components constituting the injection unit in the electrolyte injection apparatus for secondary batteries according to the present invention.
FIG. 19 is a perspective view showing the state before coupling between the injection unit and the pallet unit in the electrolyte injection apparatus for secondary batteries according to the present invention.
FIG. 20 is a front view showing the state before the injection unit and the pallet unit shown in FIG. 19 are coupled to each other.
FIG. 21 is a front view showing the state in which the liquid injection unit and the pallet unit are coupled to each other in the electrolyte injection apparatus for secondary batteries according to the present invention.
FIG. 22 is a perspective view of a needle mounted to the electrolyte injection apparatus for secondary batteries according to the present invention.
FIG. 23 is a sectional view illustrating the structure in which the injection unit and the needle unit are coupled to each other in the electrolyte injection apparatus for secondary batteries according to the present invention.
FIG. 24 is an enlarged view of a sealing member constituting the injection unit in the electrolyte injection apparatus for secondary batteries according to the present invention.
FIG. 25 is a perspective view of the lift unit constituting the electrolyte injection apparatus for secondary batteries according to the present invention when viewed in one direction.
FIG. 26 is a perspective view of the lift unit shown in FIG. 25 when viewed in the other direction.

### [Best Mode]

In the present application, it should be understood that the terms "comprises," "has," "includes," etc., when used in this specification, specify the presence of stated features, numbers, steps, operations, components, parts, or combinations thereof, but do not preclude the presence or addition of one or more other features, numbers, steps, operations, components, parts, or combinations thereof.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, an electrolyte injection apparatus for secondary batteries according to the present invention will be described with reference to the accompanying drawings.

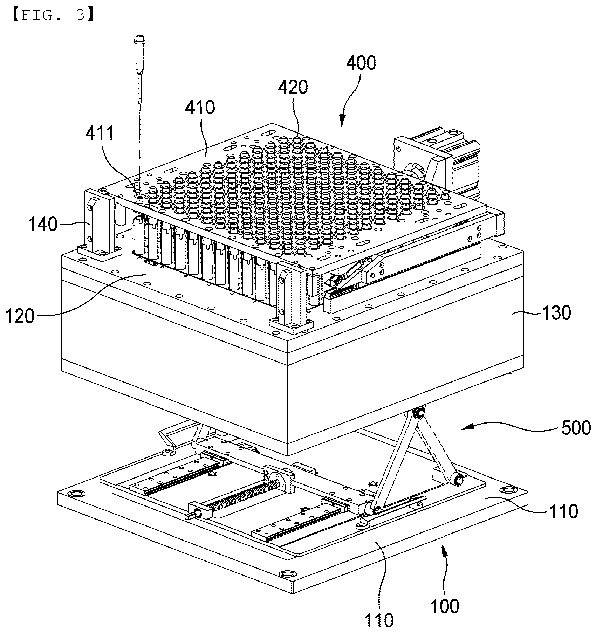

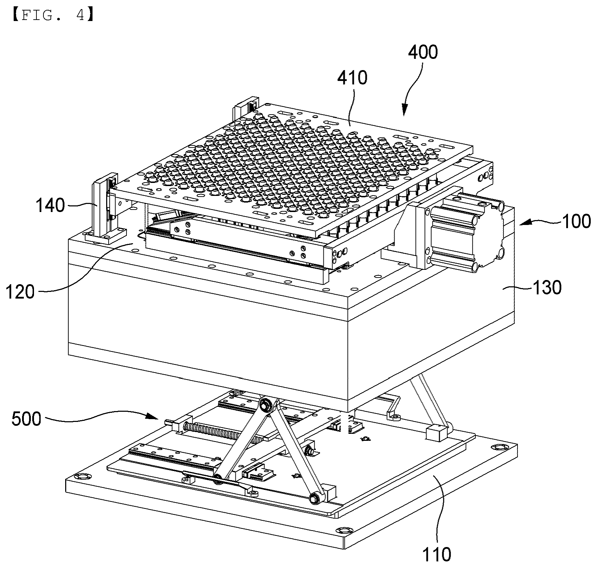

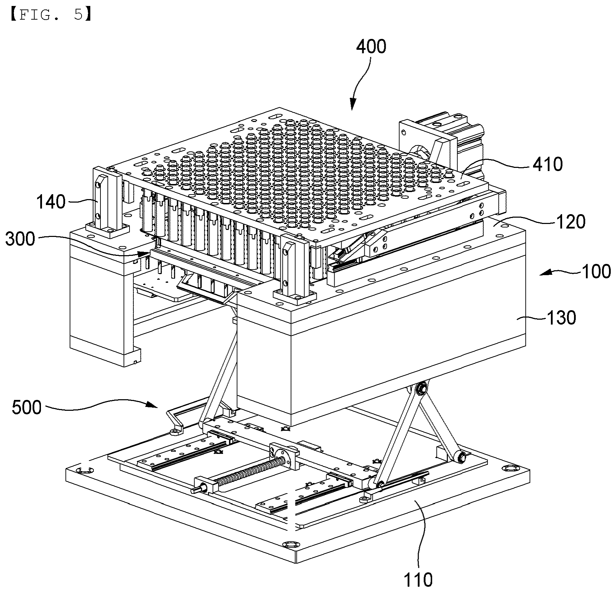

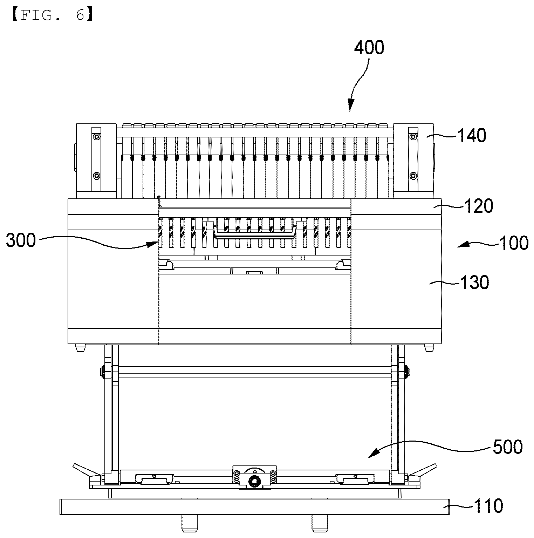

FIG. 3 is a perspective view of an electrolyte injection apparatus for secondary batteries according to the present invention in the state in which an injection unit and a needle unit are coupled to each other and a lift unit is mounted under the injection unit, FIG. 4 is a perspective view of the electrolyte injection apparatus for secondary batteries shown in FIG. 3 when viewed in the other direction, FIG. 5 is a perspective view showing the interior of the electrolyte injection apparatus for secondary batteries shown in FIG. 3, and FIG. 6 is a front view of the electrolyte injection apparatus for secondary batteries shown in FIG. 5.

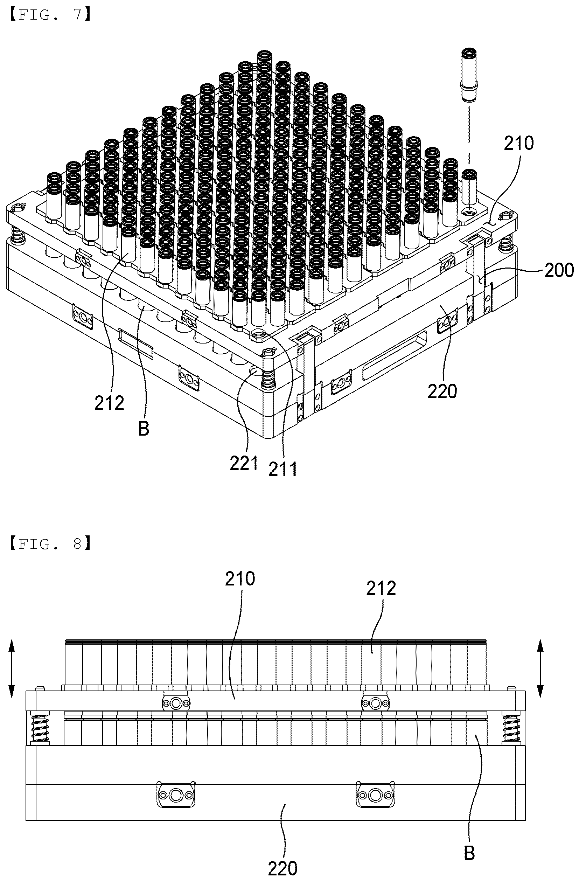

In addition, FIG. 7 is a perspective view of a pallet unit mounted to the electrolyte injection apparatus for secondary batteries according to the present invention, and FIG. 8 is a front view of the pallet unit shown in FIG. 7.

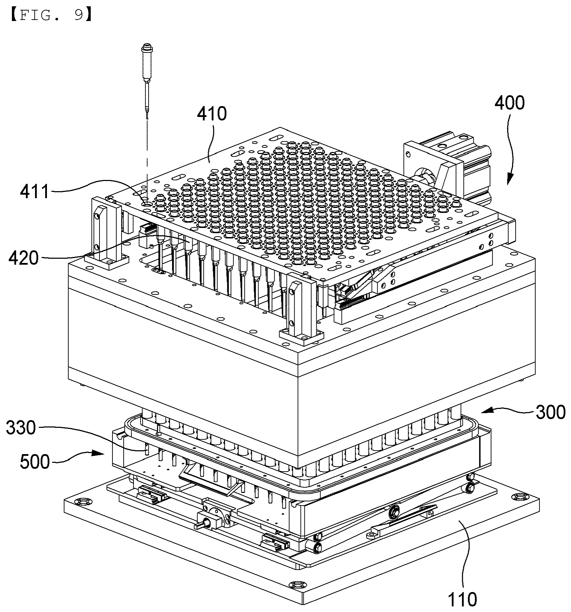

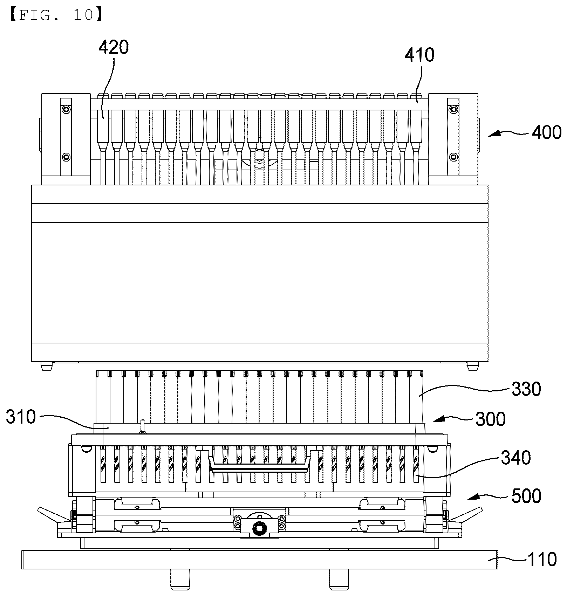

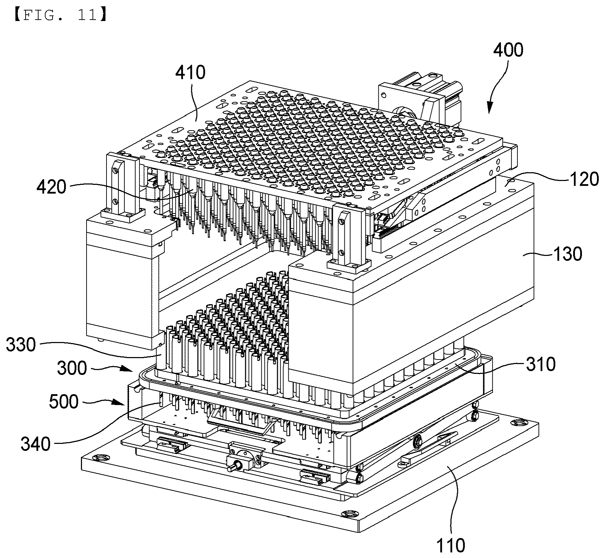

In addition, FIG. 9 is a perspective view of the electrolyte injection apparatus for secondary batteries according to the present invention in the state in which the injection unit and the needle unit are separated from each other and the lift unit is mounted under the injection unit, FIG. 10 is a front view of the electrolyte injection apparatus for secondary batteries shown in FIG. 9, and FIG. 11 is a perspective view showing the interior of the electrolyte injection apparatus for secondary batteries shown in FIG. 9.

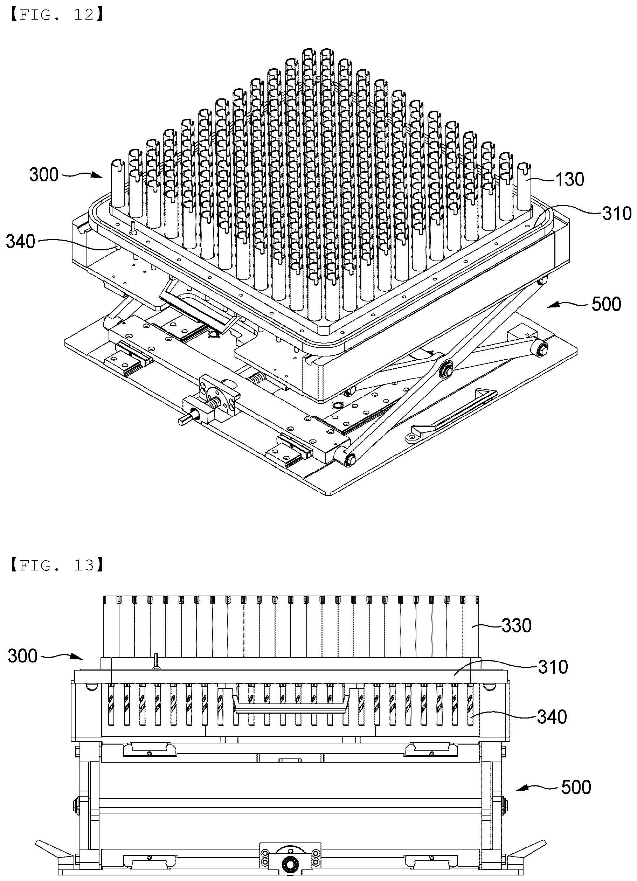

In addition, FIG. 12 is a perspective view showing the state in which the injection unit constituting the electrolyte injection apparatus for secondary batteries according to the present invention is seated on the lift unit, and FIG. 13 is a front view showing the state in which the injection unit shown in FIG. 12 is seated on the lift unit.

The electrolyte injection apparatus for secondary batteries according to the present invention may include a frame unit 100, a pallet unit 200, an injection unit 300, and a needle unit 400, and may further include a lift unit 500 as needed.

First, the frame unit 100 is configured to support the pallet unit 200, the injection unit 300, and the needle unit 400, and may include a lower plate 110, an upper plate 120, a side plate 130, and a vertical frame 140.

The lower plate 110 is configured to selectively support the pallet unit 200 or the lift unit 500.

The upper plate 120 is located above the lower plate 110, the center of the upper plate is open such that an upper hopper 330 constituting the injection unit 300 can protrude upward, and the injection unit 300 is detachably attached to the upper plate 120.

For example, the upper plate 120 and the injection unit 300 may be fixed to each other by male and female screw fastening using a bolt and nut; however, the present invention is not necessarily limited thereto.

The side plate 130 extends downward along the edge of the upper plate 120 so as to form an enclosed space, and the vertical frame 140 is connected to the needle unit 400 located above the upper plate 120. Of course, it is also preferable for the needle unit 400 to be detachably attached to the frame unit 100.

Although not shown in the figures, a support frame (not shown) configured to space the side plate 130 apart from the ground by a predetermined height may be connected to the side plate, and the shape of the support frame (not shown) is not particularly limited.

In FIGs. 3 to 6, a lower part of the lift unit 500 is seated on an upper surface of the lower plate 110 in an approximately quadrangular shape, and an upper part of the lift unit 500 is in tight contact with a lower surface of the injection unit 300. When an electrolyte is injected into a secondary battery, the pallet unit 200 having the structure shown in FIGs. 7 and 8 comes into tight contact with the upper surface of the lower plate 110 and the lower surface of the injection unit 300.

In other words, when the electrolyte is injected into the secondary battery, the pallet unit 200 including a lower pallet 220, in which the secondary battery B is received, comes into tight contact with the lower surface of the injection unit 300 such that the electrolyte can be supplied to the secondary battery B.

At this time, the pallet unit 200 is seated on the upper surface of the lower plate 110, and the lower plate 110 is moved upward and downward by a separate lifting member (not shown).

Before the electrolyte is injected or after the electrolyte is injected, therefore, the position of the pallet unit 200 is changed by upward and downward movement of the lower plate 110.

Meanwhile, since the electrolyte is repeatedly injected for a long period of time, maintenance such as inspection and replacement of parts is required.

As shown in FIGs. 9 to 12, when it is necessary to inspect, replace, or repair the parts constituting the injection unit 300, the lift unit 500 is seated on the upper surface of the lower plate 110 to support the injection unit 300 such that the injection unit 300 can be moved downward. A detailed description of the injection unit 300 and the lift unit 500 will be described later.

Referring back to FIGs. 7 and 8, the pallet unit 200 may include an upper pallet 210 and a lower pallet 220 that are detachable from each other and are configured such that the vertical distance therebetween is adjustable.

The upper pallet 210 is provided with a plurality of first through-holes 211, and an approximately cylindrical lower hopper 212 having an open top, an open bottom, and an empty interior is received in each of the first through-holes 211.

The lower hopper 212 is configured to guide the electrolyte supplied from the injection unit 300 to the secondary battery B.

The lower pallet 220 has a plurality of receiving recesses 221, in each of which is received the secondary battery B requiring injection of the electrolyte.

Here, an upper end of the secondary battery B is open to allow the electrolyte to be introduced thereinto, and it is preferable for the secondary battery to be provided in the same number as the lower hoppers 212 and to be located on the same vertical extension line as the lower hoppers 212.

Referring back to FIGs. 3 to 6 and 9 to 11, the needle unit 400 is located above the injection unit 300 and is configured to supply the electrolyte to the injection unit 300. Specifically, the needle unit 400 includes a second plate-shaped holder 410 having a plurality of third through-holes 411 and a needle 420 configured to supply an electrolyte to the upper hopper 330 and to restrict or allow the supply of the electrolyte supplied to the upper hopper 330 to the lower hopper 212, which will be described in detail later.

Meanwhile, the secondary battery B is a cylindrical secondary battery or a prismatic secondary battery before a cap assembly is mounted. Generally, the cylindrical secondary battery is manufactured by accommodating a jelly-roll electrode assembly, in which a long sheet type positive electrode and a long sheet type negative electrode are wound in the state in which a separator is interposed therebetween, in a battery case, injecting an electrolyte into the battery case, and mounting and fixing a cap assembly to the battery case.

In the present invention, the secondary battery B is in the state in which the electrode assembly is received in the battery case and the top of the battery case is open. The electrode assembly corresponds to a known technical configuration, and therefore a detailed description thereof will be omitted.

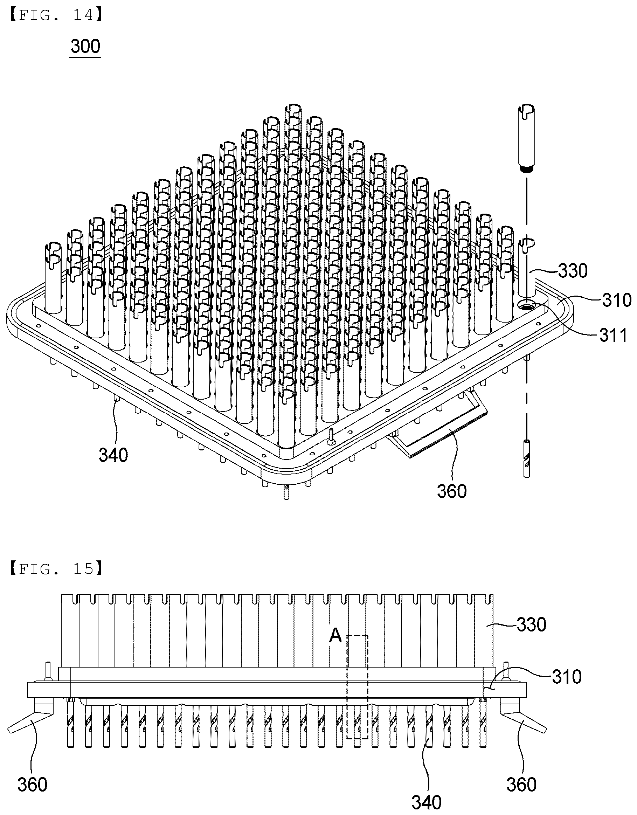

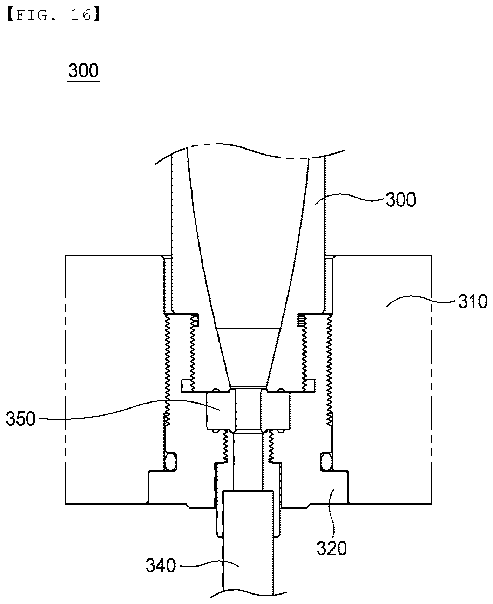

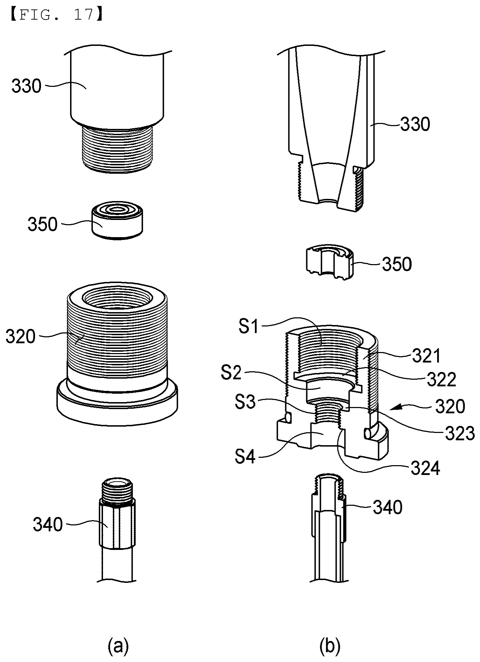

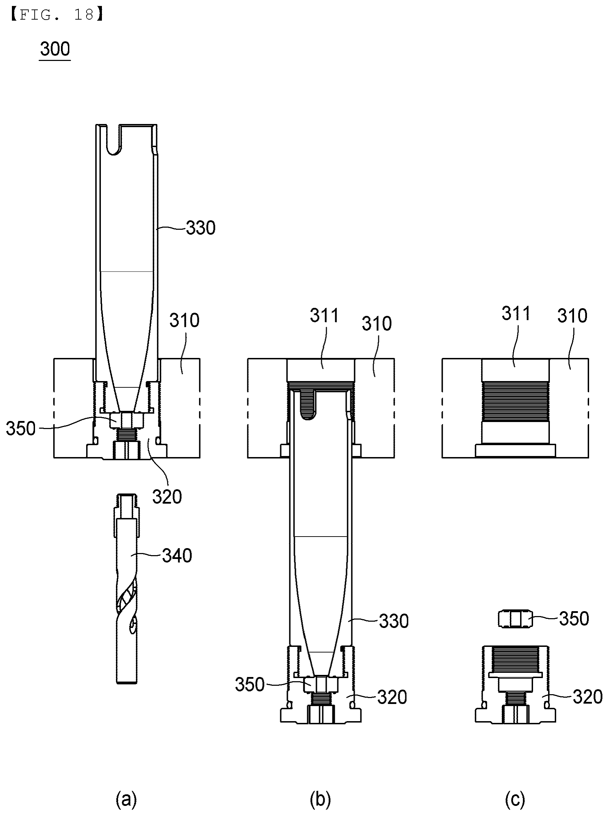

FIG. 14 is a perspective view of the injection unit constituting the electrolyte injection apparatus for secondary batteries according to the present invention, FIG. 15 is a front view of the injection unit shown in FIG. 14. In addition, FIG. 16 is an enlarged sectional view of part "A" of FIG. 15, FIG. 17 is an exploded perspective view of part "A" of FIG. 15, and FIG. 18 is a sectional view illustrating a process of disassembling components constituting the injection unit in the electrolyte injection apparatus for secondary batteries according to the present invention.

The injection unit 300 is located above the pallet unit 200 and is configured to supply the electrolyte to the lower hopper 212, and may include a first holder 310, a socket portion 320, an upper hopper 330, a nozzle portion 340, a sealing member 350, and a first handle 360.

First, the first holder 310 has an approximately flat plate shape and is provided with a plurality of second through-holes 311.

The socket portion 320 is mounted in each of the second through-holes 311 and is configured to fix the upper hopper 330, the nozzle portion 340, and the sealing member 350.

Referring to FIGs. 16 to 18, more specifically, the socket portion 320 is open at the top and bottom, is surrounded by a side wall 321 so as to have a space portion therein, and has a circular horizontal section.

Here, the inner space portion of the socket portion 320 may include a first space portion S1 located above, a second space portion S2 located under the first space portion S1, a third space portion S3 located under the second space portion S2, and a fourth space portion S4 located under the third space portion S3. In this case, the inner diameter of the first space portion S1, the second space portion S2, the third space portion S3 and the fourth space portion S4 decreases in the order of the first space portion S1, the second space portion S2, the fourth space portion S4, and the third space portion S3.

In addition, a first step portion 322, a second step portion 323, and a third step portion 324 are provided at the boundary between the first space portion S1 and the second space portion S2, the boundary between the second space portion S2 and the third space portion S3, and the boundary between the third space portion S3 and the fourth space portion S4, respectively, such that the inner diameters of the space portions are different from each other.

Consequently, the upper hopper 330 extends upward in the state in which a lower side thereof is coupled to the first space portion S1 of the socket portion 320, and the nozzle portion 340 extends downward in the state in which an upper side thereof is coupled to the third space portion S3 and the fourth space portion S4 of the socket portion 320. The sealing member 350 is interposed between the lower side of the upper hopper 330 and the upper side of the nozzle portion 340, i.e., the second space portion S2.

The upper hopper 330, which extends upward by a predetermined length in the state in which the lower side thereof is fixed to the socket portion 320, temporarily receives the electrolyte supplied from the needle unit 400, and is approximately cylindrical in shape with an open top and bottom.

The nozzle portion 340, which extends downward by a predetermined length in the state in which the upper side thereof is fixed to the socket portion 320, is formed in a hollow pipe shape with an open top and bottom, and is located in the lower hopper 212 during injection of the electrolyte.

Here, it is preferable for the nozzle portion 340 to be provided in a side surface thereof with one or more slits 341, and it is preferable for the one or more slits 341 to be formed along the side surface of the nozzle portion in a spiral shape.

The electrolyte supplied to the secondary battery received in the lower pallet must be injected in a constant amount at all times. If the supplied electrolyte scatters and adheres to an inner wall of the lower hopper or leaks out, the injection amount of the electrolyte may vary, which may lead to defects.

For example, in addition to a certain amount of electrolyte, air is present above the electrolyte in the upper hopper 330. However, since an electrolyte supply process is performed under decompression conditions, the air is sucked into the lower hopper when the electrolyte filling the upper hopper 330 moves to the lower hopper.

The air hits the electrolyte in the lower hopper, causing the electrolyte to scatter and adhere to the inner wall of the lower hopper. As a result, the amount of electrolyte to be injected into the secondary battery may be insufficient, or conversely, the amount of the electrolyte injected into some secondary batteries may be increased due to the electrolyte that has adhered to the inner wall.

However, when one or more slits 341 are provided in the side surface, the air sucked into the lower hopper after the electrolyte is transferred to the lower hopper is dispersed through a lower opening of the nozzle portion 340 and the slits 341 in the side surface thereof, whereby it is possible to minimize scattering of the electrolyte.

Meanwhile, it is preferable for at least one of the socket portion 320, the upper hopper 330, and the nozzle portion 340 to be detachable, and it is more preferable for all of them to be detachable.

As described above, the electrolyte injection apparatus requires maintenance, inspection, or replacement of parts during the use thereof.

Consequently, if an inner surface of the second through-hole 311 is provided with a female thread and an outer surface of the side wall 321 of the socket portion 320 is provided with a male thread, it is very easy to detach the socket portion 320.

In addition, if an inner surface of the side wall 321 corresponding to the first space portion S1 of the socket portion 320 is provided with a female thread and an outer surface of the lower side of the upper hopper 330 is provided with a male thread, it is very easy to detach the upper hopper 330.

In addition, if an inner surface of the side wall 321 corresponding to the third space portion S3 of the socket portion 320 is provided with a female thread and an outer surface on the upper side of the nozzle portion 340 is provided with a male thread, it is very easy to detach the nozzle portion 340. Of course, the fourth space portion S4 of the socket portion 320 may also be provided with a female thread, in which case the nozzle portion 340 is also provided with a male thread.

Meanwhile, an inner surface of the side wall 321 corresponding to the second space portion S2 of the socket portion 320 may not be provided with a female thread. This is because the sealing member 350 made of an elastic material is located in the second space portion S2 and the sealing member 350 may be replaced by separating the upper hopper 330.

More specifically, regarding the order of detachment of the socket portion 320, the upper hopper 330, the nozzle portion 340, and the sealing member 350, the nozzle portion 340 coupled to the socket portion 320 by male and female fastening may be separated downward ((a) of FIG. 18). When the socket portion 320 coupled to the first holder 310 by male and female fastening is separated downward, the upper hopper 330 may also be separated ((b) of FIG. 18). In addition, the upper hopper 330 and the sealing member 350 may be sequentially separated from the socket portion 320 ((c) of FIG. 18).

Of course, the order is not limited to the order shown in FIG. 18. For example, the upper hopper 330 may be separated before the nozzle portion 340 is separated, and both thereof may be simultaneously separated.

Meanwhile, reference numeral 360 indicates the first handle 360, it is preferable for one or more first handles to be provided at the edge of the first holder 310, and a worker may grip the first handles 360 to transfer the injection unit 300.

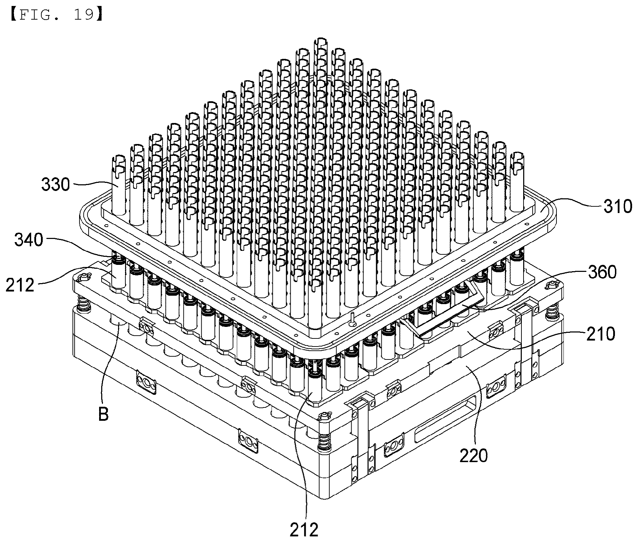

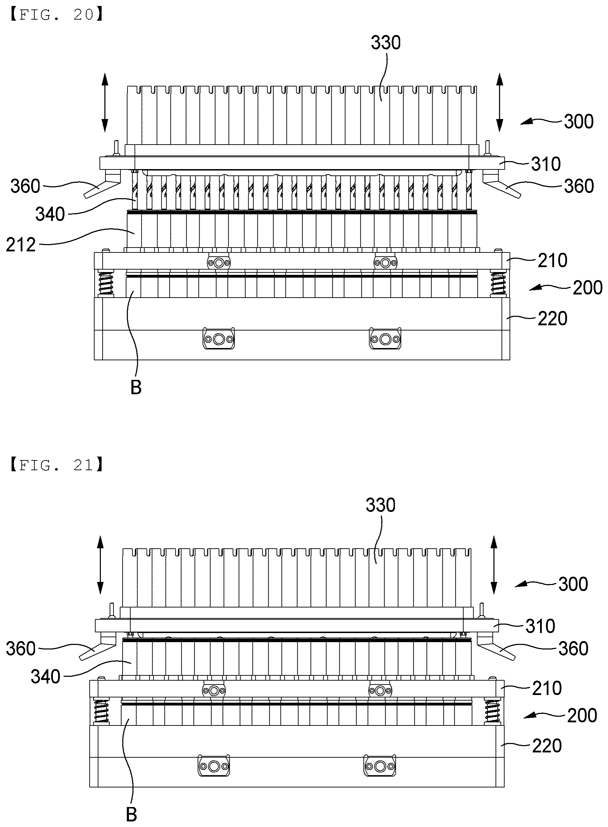

FIG. 19 is a perspective view showing the state before coupling between the injection unit and the pallet unit in the electrolyte injection apparatus for secondary batteries according to the present invention, FIG. 20 is a front view showing the state before the injection unit and the pallet unit shown in FIG. 19 are coupled to each other, and FIG. 21 is a front view showing the state in which the liquid injection unit and the pallet unit are coupled to each other in the electrolyte injection apparatus for secondary batteries according to the present invention.

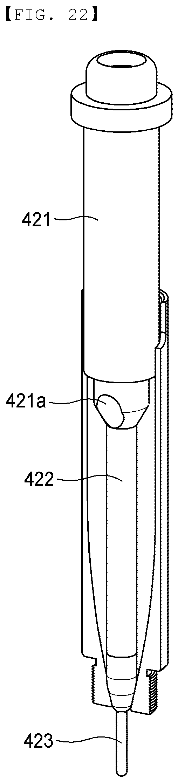

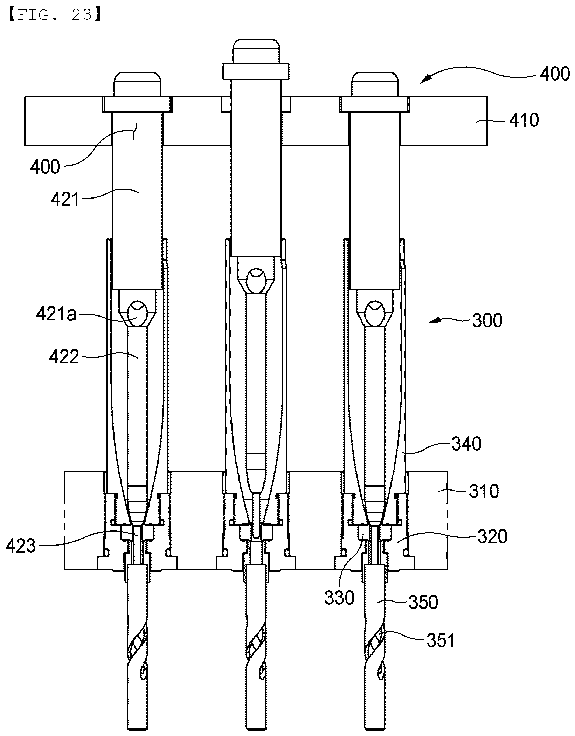

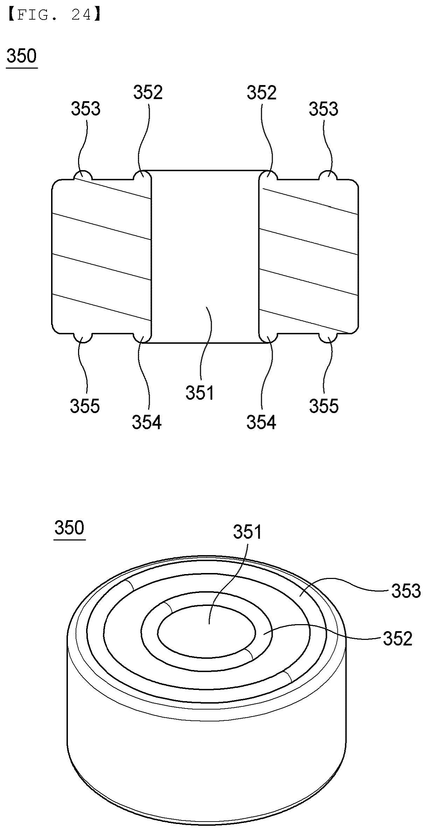

In addition, FIG. 22 is a perspective view of the needle mounted to the electrolyte injection apparatus for secondary batteries according to the present invention, FIG. 23 is a sectional view illustrating the structure in which the injection unit and the needle unit are coupled to each other in the electrolyte injection apparatus for secondary batteries according to the present invention, and FIG. 24 is an enlarged view of the sealing member constituting the injection unit in the electrolyte injection apparatus for secondary batteries according to the present invention.

In order to inject the electrolyte into the secondary battery, the secondary battery B must be received in the lower pallet 220, and therefore the pallet unit 200 and the injection unit 300 must be separated from each other by a certain distance, and the separated state is maintained even after the secondary battery B is received in the lower pallet 220 (see FIGs. 19 and 20).

When the electrolyte is injected into the secondary battery B, the first holder 310 and the lower hopper 212 come into contact with the secondary battery B, and at this time the nozzle portion 340 is located in the lower hopper 212 (see FIG. 21).

The needle 420 mounted to the second holder 410 so as to be movable upward and downward includes a first body portion 421, a second body portion 422 located under the first body portion 421, and a nip portion 423 located under the second body portion 422 (see FIGs. 22 and 23).

The first body portion 421 is hollow with the top open to allow the electrolyte to be introduced thereinto, and one or more electrolyte outflow holes 421a are formed in a side surface thereof. Of course, an injection pipe (not shown) may be connected to the open top of the first body portion 421 such that the electrolyte can be supplied to the first body portion 421 from the outside.

An upper side of the second body portion 422 is connected to the first body portion 421, and a lower side of the second body portion is connected to the nip portion 423.

Meanwhile, it is preferable for the outer diameter of the first body portion 421, the second body portion 422, and the nip portion 423 to be gradually decreased in the order of the first body portion 421, the second body portion 422, and the nip portion 423, which prevents backflow of the introduced electrolyte.

The sealing member 350 is located in the socket portion 320 and is interposed between the upper hopper 330 and the nozzle portion 340. More specifically, the sealing member 350 is configured to increase the adhesion between the second step portion of the socket portion and the upper hopper, thereby preventing the leakage of the electrolyte and ensuring the movement of the electrolyte, wherein the sealing member is approximately cylindrical in shape in which an electrolyte passage 351 configured to allow the electrolyte to pass therethrough is formed in the center thereof (see FIG. 24).

It is preferable for at least one protrusion to be formed on each of an upper surface and a lower surface of the sealing member 350. For example, a circular ring-shaped first protrusion 352 may be provided on the upper surface of the sealing member 350, more specifically along an upper edge of the electrolyte passage 351, and the sealing member may be in tight contact with the second body portion of the needle via the first protrusion 352.

In addition, a circular ring-shaped second protrusion 353 may be provided spaced apart from the first protrusion 352 by a predetermined distance, and the adhesion with the upper hopper may be increased by the second protrusion 353.

In addition, a third protrusion 354 may be provided on the lower surface of the sealing member 350, more specifically along a lower edge of the electrolyte passage 351, and a circular ring-shaped fourth protrusion 355 may be provided spaced apart from the third protrusion 354 by a predetermined distance, wherein adhesion to the second step portion of the socket portion may be increased by the third protrusion 354 and the fourth protrusion 355.

Here, the sealing member 350 is preferably made of a material that has certain elasticity and does not react with the electrolyte. For example, the sealing member may be made of ethylene propylene rubber (EPDM), but the material for the sealing member is not limited thereto as long as the same function and purpose can be achieved.

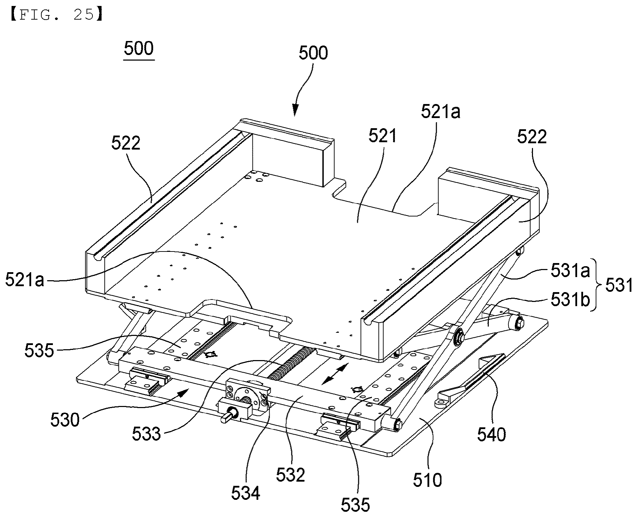

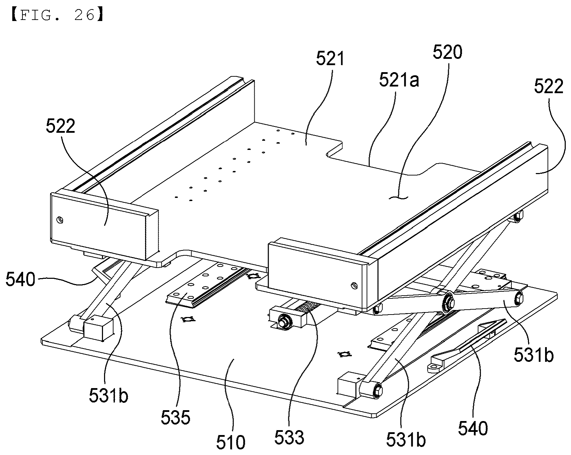

FIG. 25 is a perspective view of the lift unit constituting the electrolyte injection apparatus for secondary batteries according to the present invention when viewed in one direction, and FIG. 26 is a perspective view of the lift unit shown in FIG. 25 when viewed in the other direction.

The lift unit 500 will be described with reference to FIGs. 12, 13, 25, and 26. The lift unit 500 is configured to support the injection unit 300 when the injection unit 300 is removed. The injection unit 300 is heavy because most parts are made of metal, and therefore an accident may occur during work or it may take a lot of time to repair or replace parts.

However, in the present invention, the lift unit 500 capable of supporting the injection unit 300 is provided, whereby it is possible to increase work efficiency and to contribute to preventing accidents.

Specifically, the lift unit 500 may include a plate-shaped base portion 510, a support portion 520, a lifting portion 530, and a second handle 540.

The support portion 520 is located above the base portion 510, is movable upward and downward, and includes an approximately rectangular first plate 521 and a plurality of second plates 522 extending upward by a predetermined height from the vicinity of the edge of the first plate 521.

Here, it is preferable for two or more second plates 522 to be located facing each other so as to stably support the first holder 310, and it is more preferable for the height of the second plate 522 to be such that the nozzle portion does not collide with the first plate 521 when the first holder 310 is seated on an upper end of the second plate.

Meanwhile, it is preferable for a single incision portion 521a to be formed at the edge of the first plate 521 such that the injection portion 300 can be easily gripped.

The lifting portion 530, which is configured to move the support portion 520 upward and downward, may include a lifting bar 531, a connection bar 532, a screw shaft 533, a manipulation portion 534, and a guide bar 535.

The lifting bar 531 is located between the base portion 510 and the support portion 520, and may include a first lifting bar 531a and a second lifting bar 531b connected to each other in a hinge structure while intersecting each other.

Specifically, one end of the first lifting bar 531a is connected to one side of the connection bar 532, and the other end of the first lifting bar is in tight contact with a lower surface of the first plate 521. In addition, one end of the second lifting bar 531b is connected to the base portion 510, and the other end of the second lifting bar is disposed in tight contact with the lower surface of the first plate 521.

Although one lifting bar 531 is shown as being provided at each of opposite edges of the base portion 510 in FIGs. 25 and 26, changes are possible.

The connection bar 532 is disposed in a direction intersecting with the pair of lifting bars 531 and has a certain length, and one end of the first lifting bar 531a is fastened to both sides of the connection bar.

The screw shaft 533 is disposed so as to intersect with the connection bar 532 in order to guide forward and backward movement of the connection bar 532, and the manipulation portion 534 fastened to the screw shaft 533 by screw fastening is located at the rear of the connection bar 532.

When the manipulation portion 534 is rotated in a forward direction or in a reverse direction, therefore, the connection bar 532 moves forward or rearward, whereby the intersection angle between the first lifting bar 531a and the second lifting bar 531b changes, causing upward and downward movement of the support portion 520.

Meanwhile, the guide bar 535, which is disposed parallel to the screw shaft 533, is configured to reliably prevent twisting of the connection bar 532 during forward or rearward movement thereof. It is preferable for a part of the guide bar 535 to be cut in order to receive the connection bar 532.

Reference numeral 540 indicates the second handle 540 that can be gripped by hand to facilitate carrying of the lift unit 500, and the second handle may be provided on the base portion 510.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

100: Frame unit
110: Lower plate 120: Upper plate
130: Side plate 140: Vertical frame
200: Pallet unit
210: Upper pallet
211: First through-hole 212: Lower hopper
220: Lower pallet 221: Receiving recess
300: Injection unit
310: First holder 311: Second through-hole
320: Socket portion
321: Side wall 322: First step portion
323: Second step portion 324: Third step portion
330: Upper hopper
340: Nozzle portion 341: Slit
350: Sealing member
351: Electrolyte passage 352: First protrusion
353: Second protrusion 354: Third protrusion
355: Fourth protrusion
360: First handle
400: Needle unit
410: Second holder 411: Third through-hole
420: Needle
421: First body portion 421a: Electrolyte outflow hole
422: Second body portion 423: Nip portion
500: Lift unit
510: Base portion
520: Support portion
521: First plate 521a: Incision portion
522: Second plate
530: Lifting portion
531: Lifting bar
531a: First lifting bar 531b: Second lifting bar
532: Connection bar
533: Screw shaft 534: Manipulation portion
535: Guide bar
540: Second handle
S1: First space portion S2: Second space portion
S3: Third space portion S4: Fourth space portion
B: Secondary battery

## Claims

1. An electrolyte injection apparatus for secondary batteries, the electrolyte injection apparatus comprising:
a frame unit comprising a lower plate and an upper plate spaced apart from the lower plate by a predetermined distance, a center of the upper plate being open;
a pallet unit detachably located above the lower plate, the pallet unit being provided with a lower hopper into which a secondary battery and an electrolyte are supplied;
an injection unit located above the pallet unit, the injection unit being configured to supply the electrolyte to the lower hopper; and
a needle unit located above the upper plate, the needle unit being configured to supply the electrolyte to the injection unit, wherein
the injection unit and the needle unit are separable from the upper plate.

2. The electrolyte injection apparatus according to claim 1, wherein
the injection unit comprises:
a first plate-shaped holder having a second through-hole,
a socket portion received in the second through-hole,
an upper hopper extending upwardly from the first holder when a lower side thereof is fastened to the socket portion, and
a nozzle portion extending downwardly from the first holder when an upper side thereof is fastened to the socket portion, and
wherein the needle unit comprises a second plate-shaped holder having a third through-hole and a needle received in the second holder.

3. The electrolyte injection apparatus according to claim 2, wherein the first holder and the upper plate are detachably connected to each other by male and female screw fastening.

4. The electrolyte injection apparatus according to claim 2, wherein the socket portion is fixed to the second through-hole by male and female screw fastening.

5. The electrolyte injection apparatus according to claim 2, wherein the upper hopper is fixed to the socket portion by male and female screw fastening.

6. The electrolyte injection apparatus according to claim 2, wherein the nozzle portion is fixed to the socket portion by male and female screw fastening.

7. The electrolyte injection apparatus according to claim 2, wherein the injection unit further comprises a sealing member received in the socket portion, the sealing member being interposed between the upper hopper and the nozzle portion.

8. The electrolyte injection apparatus according to claim 2, wherein the injection unit further comprises a first handle configured to allow the first holder to be gripped therethrough.

9. The electrolyte injection apparatus according to claim 2, wherein the nozzle portion is formed in a hollow pipe shape with an open top and bottom and is provided in a side surface thereof with one or more slits.

10. The electrolyte injection apparatus according to claim 9, wherein the one or more slits are formed along the side surface of the nozzle portion in a spiral shape.

11. The electrolyte injection apparatus according to claim 2, further comprising a lift unit configured to move the injection unit upward and downward while supporting the injection unit.

12. The electrolyte injection apparatus according to claim 11, wherein the lift unit comprises:
a base portion,
a support portion configured to support a lower surface of the first holder, and
a lifting portion configured to move the support portion upward and downward.

13. The electrolyte injection apparatus according to claim 12, wherein the lifting portion comprises:
a lifting bar located between the base portion and the support portion, the lifting bar comprising a first lifting bar and a second lifting bar connected to each other in a hinge structure while intersecting each other,
a connection bar fastened to one end of the first lifting bar,
a screw shaft having a predetermined extension length, the screw shaft being configured to guide forward and rearward movement of the connection bar, and
a manipulation portion configured to move the connection bar forward or rearward.

14. The electrolyte injection apparatus according to claim 13, wherein the lifting portion further comprises a guide bar configured to guide the connection bar forward or rearward.

15. The electrolyte injection apparatus according to claim 13, wherein the lift unit further comprises a second handle configured to allow the base portion to be gripped therethrough.
